# EUROPÄISCHE PATENTSCHRIFT

(11) **EP 0 925 316 B1**
(45) Veröffentlichungstag und Bekanntmachung des Hinweises auf die Patenterteilung: **28.06.2000**
(21) Anmeldenummer: 97919020.4
(22) Anmeldetag: 02.09.1997
(51) Int. Cl.: C08G 2/38, C08G 12/46

(54) **NEUE POLYMERE ACETALE VON HYDROXYCARBONSÄUREN UND DEREN DERIVATEN UND VERFAHREN ZU IHRER HERSTELLUNG**
NEW POLYMER ACETALS FROM HYDROXYCARBOXYLIC ACIDS AND THE DERIVATIVES THEREOF AND PROCESS FOR THE PRODUCTION THEREOF
NOUVEAUX ACETALS POLYMERES D'ACIDES HYDROXYCARBOXYLIQUES ET LEURS DERIVES AINSI QUE PROCEDE POUR LEUR PREPARATION

(30) Priorität: 10.09.1996 DE 19636688
(43) Veröffentlichungstag der Anmeldung: 30.06.1999
(73) Patentinhaber: Clariant GmbH, 65929 Frankfurt am Main (DE)
(72) Erfinder: FALK, Uwe, D-63486 Bruchköbel (DE); KLUG, Peter, D-63762 Grossostheim (DE); WEINELT, Frank, D-84508 Burgkirchen (DE)
(86) Internationale Anmeldenummer: EP9704771
(87) Internationale Veröffentlichungsnummer: WO9811147

(56) Entgegenhaltungen:
- EP-A- 0 512 501
- EP-A- 0 780 348
- GB-A- 453 833
- US-A- 4 438 253
- US-A- 5 202 413

## Beschreibung

Dimerfettsäurederivate stellen wichtige Produkte im Kunststoff-, Erdöl-, Schmierstoff- und Fasersektor dar (J. Am. Oil Chem. Soc. 1979, 56, A 782). Sie finden z. B. Verwendung als Weichmacherkomponenten, als Monomerbausteine für Polyamide, Tenside, Korrosionsinhibitoren und Faserpräparationsmittel. Sie zeichnen sich im allgemeinen trotz des hohen Molekulargewichtes dadurch aus, daß sie flüssig sind und vergleichsweise niedrige Viskositäten aufweisen. Weiterhin sind Dimerfettsäurederivate sehr temperaturstabil. Nachteilig für viele Anwendungen ist aber im Hinblick auf ökologische Gesichtspunkte deren ungenügende biologische Abbaubarkeit. Diese beruht auf der direkten Verknüpfung zweier Fettsäurereste durch Carbocyclen oder C-Brücken, die einen mikrobiellen Angriff erschwert. Aus dem oben genannten ist ersichtlich, daß es wünschenswert wäre, biologisch abbaubare Verbindungen mit Dimerfettsäureeigenschaften herzustellen.

Aus der deutschen Patentanmeldung 196 16 339.0 ist bekannt, daß man durch Acetalisierung von Hydroxystearinsäurederivaten dimere Ester und Amide erhalten kann, die das Eigenschaftsprofil von Dimerfettsäurederivaten aufweisen, dabei aber eine wesentlich bessere biologische Abbaubarkeit aufweisen. Ein Nachteil ist jedoch ihre relativ leichte Flüchtigkeit.

Aufgabe der vorliegenden Erfindung war somit, Polymere mit diesen Eigenschaftsprofilen herzustellen, die sich gegenüber den monomeren

Vertretern durch niedrigere Abdampfraten bei thermischer Belastung auszeichen.

Dies gelang überraschenderweise dadurch, daß man Hydroxysäuren mit Diolen, Diaminen oder Aminoalkoholen in verschiedenen Molverhältnissen zunächst zu einem Ester- oder Amidgruppierungen enthaltenden zweiwertigen Alkohol unter Wasserabscheidung kondensiert und anschließend mit Aldehyden, oder Substanzen, die Aldehyde unter den Reaktionsbedingungen freisetzen, unter Entfernung von Reaktionswasser zum entsprechenden Acetal umgesetzt. Man erhält auf diese Weise Polyacetale, die zusätzlich Ester- oder Amidgruppierungen enthalten. Hierbei ist die Acetalfunktion oberhalb pH 7 stabil, kann jedoch unter Rückbildung von Hydroxysäurederivaten nach Gebrauch im sauren pH-Bereich gespalten werden und ermöglicht so den biologischen Abbau des Produktes. Die Produkte weisen im allgemeinen Molekulargewichte von ca. 1000 - 20000 g/mol auf und stellen teilweise thixotrope Öle unterschiedlicher Viskosität dar.

Gegenstand der Erfindung sind somit polymere Acetale mit der wiederkehrenden Struktureinheit (I)

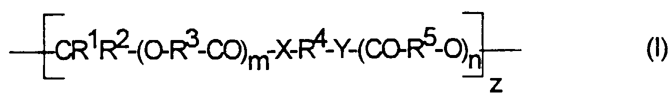

R¹ und R² bedeuten unabhängig voneinander H, einen verzweigten oder unverzweigten, gesättigten oder ungesättigten C₁-C₁₂-Alkyl-, oder einen Phenyl- oder Naphthylrest. Bevorzugt sind H, C₁-C₄-Alkyl und Phenyl.

R³ und R⁵ bedeuten unabhängig voneinander einen verzweigten oder unverzweigten, substituierten oder unsubstituierten C₁-C₃₀-Alkylen- oder C₂-C₃₀-Alkenylenrest, einen Phenylen- oder Naphthylenrest. Bevorzugt ist C₅-C₂₀-, insbesondere C₁₇-Alkylen oder Alkenylen.

R⁴ bedeutet einen verzweigten oder unverzweigten C₁-C₂₀₀-, vorzugsweise einen C₂-C₅₀-Alkylen- oder Cycloalkylenrest, der gegebenenfalls durch O unterbrochen ist, oder einen C₆-C₂₀₀-Arylen oder Alkylarylenrest, wobei diese Reste gegebenenfalls durch Heteroatome wie F, Cl, Br oder I substituiert oder durch Heteroatome wie Sauerstoff, Schwefel oder Stickstoff, vorzugsweise Sauerstoff, unterbrochen sein können.

X und Y bedeuten unabhängig voneinander O oder NR⁶, bevorzugt O, wobei R⁶ entweder H oder einen verzweigten oder unverzweigten C₁-C₃₀-Alkyl- oder Cycloalkylrest oder einen C₆-C₅₀-Aryl- oder C₇-C₅₀-Alkylarylrest, vorzugsweise H oder einen C₁-C₄-Alkylrest darstellt.

n und m stellen Zahlen von 0 bis 10, vorzugsweise von 0 bis 5 dar, falls X = NR⁶ ist m nicht gleich 0 und falls Y = NR⁶ ist n ungleich 0, außerdem ist die Summe aus n und m größer als 0, vorzugsweise 1 bis 5.
z stellt eine Zahl von 2 bis 100, vorzugsweise von 3 bis 20 dar.

Die erfindungsgemäßen Acetale eignen sich als Basiskomponenten für wasserlösliche Kühlschmiermittel.

Ein weiterer Gegenstand der Erfindung ist ein Verfahren zur Herstellung dieser Polyacetale, indem man
entweder
Hydroxycarbonsäuren der Formel HO-R³-COOH oder HO-R⁵-COOH oder Gemische solcher Säuren mit Diolen, Aminoalkoholen oder Diaminen der Formel HY-R⁴-XH oder Gemischen aus diesen Komponenten kondensiert und die dabei entstehenden Produkte, die zwei freie OH-Gruppen enthalten, mit einem Aldehyd oder Keton der Formel R¹R²CO unter Säurekatalyse zum Polyacetal umsetzt
oder
indem man zunächst eine Hydroxycarbonsäure mit einem Aldehyd oder Keton zu einer Acetaldicarbonsäure acetalisiert und anschließend mit einem Diol, einem Diamin oder Aminoalkohol oder Gemischen hieraus verestert oder amidiert oder einen Acetaldicarbonsäureester eines C₁-C₄-Monoalkohols mit einem Diol, Diamin oder Alkanolamin oder Mischungen hiervon unter Polymerisation umestert oder umamidiert.

Für die Herstellung der erfindungsgemäßen Polyacetale sind gesättigte und ungesättigte, verzweigte oder unverzweigte C₂-C₃₁-Hydroxycarbonsäuren mit primärer oder sekundärer Hydroxylgruppe wie Glykolsäure, Milchsäure, 4-Hydroxybenzoesäure, 4-Hydroxybutansäure, 5-Hydroxypentansäure, 6-Hydroxyhexansäure, 12-Hydroxystearinsäure oder Ricinolsäure oder Hydroxyfettsäuren, die durch Oxidation von ungesättigten Fettsäuren gewonnen werden, geeignet. Insbesondere geeignet sind Milchsäure, 12-Hydroxystearinsäure und Ricinolsäure und deren technische Qualitäten, die z. B. aus Ricinusöl gewonnen werden. Außerdem sind auch entsprechende Lactone der Hydroxysäuren wie Y-Butyrolacton oder Caprolacton geeignet, da diese mit Diolen unter Umesterung und Ringöffnung zu den obengenannten Zwischenprodukten reagieren.

Die Darstellung von Hydroxyfettsäureestern ist im wesentlichen in der Literatur beschrieben; als Beispiele seien Ind. Eng. Chem. 1953, 45, 1777 sowie die Patentschriften US 2 397 008, US 2 385 849 und 2 390 027 genannt. Die Kondensation der Hydroxyfettsäure mit dem entsprechenden Alkohol wird dabei bevorzugt unter Säurekatalyse und azeotroper Entfernung des Reaktionswasser mit einem geeigneten Lösungsmittel bei 40 - 140 °C, insbesondere 60 - 110°C durchgeführt. Geeignete Lösungsmittel sind beispielsweise gesättigte und aromatische, acyclische und cyclische Kohlenwasserstoffe, wie Petroleumbenzin, Cyclohexan, Toluol oder Xylol. Als Diolkomponente eignen sich aliphatische, cycloaliphatische oder aromatische Dialkohole, deren Alkylketten durch weitere Heteroatome, insbesondere Sauerstoffatome, unterbrochen sein können. Geeignete Alkohole sind z. B. Ethylenglykol, Neopentylglykol, Hexandiol, Diethylenglykol, Triglykol und Tetraglykol, sowie allgemein Polyglykole oder Mischpolyglykole mit Anteilen an Propylen- oder Butylengruppen. Geeignete Katalysatoren für die Veresterung sind starke Sulfonsäuren oder Mineralsäuren wie z. B. p-Toluolsulfonsäure, Methansulfonsäure, Schwefelsäure, Phosphorsäure sowie saure lonenaustauscher, besonders bevorzugt sind Schwefelsäure und Methansulfonsäure in Konzentrationen von 0,01 - 2 %, bevorzugt 0,1 - 1,0 Gew.-% bezüglich der Gesamtmasse von Alkohol und Hydroxyfettsäure.

Die Darstellung von Hydroxycarbonsäureamiden oder Hydroxycarbonsäureamidestern erfolgt aus Hydroxycarbonsäure und Diamin oder Aminoalkohol mit oder ohne Katalysator durch Erhitzen der Komponenten in Substanz auf 150 - 220 °C oder unter azeotroper Entfernung von Reaktionswasser mit einem geeigneten Lösungsmittel bei 100 - 220 °C, insbesondere 150 - 200 °C. Geeignete Lösungsmittel sind beispielsweise gesättigte und aromatische, acyclische und cyclische Kohlenwasserstoffe, wie Petroleumbenzin, Cyclohexan, Toluol, Xylol oder Solvent Naphtha. Geeignete Amine sind beispielsweise aliphatische, cyclische und aromatische Diamine, deren Alkylrest gegebenenfalls weitere Heteroatome enthält. Beispiele sind primäre Diamine wie Ethylendiamin, Propylendiamin, Hexamethylendiamin oder Phenylendiamin. Geeignete Aminoalkohole sind z. B. Aminoethanol, Diglykolamin oder Aminopropanol.

Die Acetalisierung der aus Hydroxysäure und Diol/Diamin/Aminoalkohol gebildeten Kondensationsprodukte mit dem entsprechenden Aldehyd/Keton wird unter Säurekatalyse mit und ohne Lösungsmittel, bevorzugt unter azeotroper Entfernung des Reaktionswassers mit einem geeigneten Lösungsmittel bei 40 - 140 °C durchgeführt.

Als Aldehydkomponente geeignet sind beispielsweise aliphatische Aldehyde wie Formaldehyd, Acetaldehyd, Trichloracetaldehyd, Propionaldehyd, Butyraldehyd, Isobutyraldehyd, Isononylaldehyd und Dodecanal, aromatische Aldehyde wie Benzaldehyd und Naphthaldehyd und Verbindungen, die solche Aldehyde unter den Reaktionsbedingungen freisetzen können, wie z. B. Trioxan oder Paraformaldehyd, die trimeren und tetrameren Formen des Acetaldehyds sowie Dialkylacetale. Insbesondere geeignet ist Formaldehyd oder Paraformaldehyd, die vollständige Umsätze zum Acetal ermöglichen. Ebenfalls geeignet sind Lösungen, insbesondere wäßrige Lösungen von Aldehyden, z. B. Formalinlösung. Diese Aldehyde werden in nahezu äquimolarer oder überstöchiometrischer Menge, der Überschuß ist unkritisch, insbesondere zu 70 - 130 % der theoretischen Menge eingesetzt.

Geeignete Lösungsmittel sind beispielsweise gesättigte und aromatische, acyclische und cyclische Kohlenwasserstoffe, wie Petroleumbenzin, Cyclohexan, Toluol oder Xylol; geeignete Katalysatoren für die Acetalisierung sind z. B. p-Toluolsulfonsäure, Methansulfonsäure, Schwefelsäure, Phosphorsäure sowie saure lonenaustauscher, besonders bevorzugt sind Schwefelsäure und Methansulfonsäure in Konzentrationen von 0,01 - 2 %, bevorzugt 0,1 - 1,0 Gew.-% bezüglich des eingesetzten Hydroxyfettsäurederivats.

Die stattfindende Acetalbildung läßt sich durch die abgeschiedene Wassermenge im Wasserabscheider verfolgen und führt im allgemeinen zur Bildung der theoretische Menge Kondensatwasser.

An den Acetalisierungsschritt schließt sich eine Neutralisation des Katalysatoranteils des Reaktionsgemisches an, die die Hydrolyse des gebildeten Acetals verhindern soll. Zur Neutralisation sind Metallhydroxide und Metallalkoxide, insbesondere Natriumhydroxid, Kaliumhydroxid,

Kalium-tert.-butylat, Natriummethylat oder methanolische Natriummethanolat-Lösung geeignet.

Ausgehend von Hydroxysäuren können die erfindungsgemäßen Acetale auf verschiedenen Wegen erzeugt werden.

Zum einen kann die Umsetzung der Hydroxysäuren zu den Acetalen der Hydroxysäureester oder Hydroxysäureamide oder Hydroxysäureamidester wie oben beschrieben in zwei Schritten zunächst unter Veresterung oder Amidierung von Hydroxysäuren zum Ester oder Diamid oder Amidester, dessen Zwischenisolierung und anschließender Acetalisierung erfolgen. Im Falle der Polyacetalester kann die Durchführung dieser Schritte in einem Reaktionsgefäß in einer Eintopfreaktion erfolgen. Hierbei benutzt man das gleiche Reaktionsgefäß und den gleichen Katalysator für den Veresterungs- und den Acetalisierungsschritt.

Alternativ dazu können Acetale von Hydroxysäureestern und Dihydroxysäureamiden auch dadurch gewonnen werden, daß man zunächst aus der entsprechenden Hydroxysäure oder Mischungen von Hydroxysäuren das Acetal gewinnt und dieses im zweiten Schritt mit einem geeigneten Diol oder Diamin zu entsprechenden Polyacetalestern und/oder -amiden umsetzt.

Eine weitere Möglichkeit bietet die Synthese eines Hydroxyfettsäureesters eines C₁-C₄-Alkohols wie Methanol, Ethanol, Propanol oder Butanol (z. B. 12-Hydroxystearinsäuremethylester), dessen anschließende Acetalisierung zum entsprechenden Esteracetal (Beispiel 2a) und die darauffolgende Umesterung oder Umamidierung mit Diol bzw. Aminoalkohol oder Diamin zum gewünschten polymeren Endprodukt (Beispiel 2b). Diese Vorgehensweise ist insbesondere zur Synthese von Polyalkylamiden von Acetaldicarbonsäuren geeignet.

Die Erfindung wird anhand der nachfolgenden Beispiele näher erläutert: Viskositäten wurden hierbei an einem Bohlin-Rheometer bei einer Scherrate von 10s⁻¹ gemessen. Die mittleren Molekulargewichte wurden durch Gelpermeationschromatographie ermittelt (Polystyrol als Standard). Die %-Angaben sind, soweit nicht anders angegeben, als Gew.-% zu verstehen.

### Beispiel 1:

### Allgemeine Arbeitsvorschrift zur Synthese polymerer Acetalester:

In einem Vierhalskolben mit Rührer und Wasserabscheider werden die entsprechende Hydroxysäure und das entsprechende Diol in Cyclohexan (ca. 50 %ige Lösung) gelöst und 0,4 % konz. Schwefelsäure (bezüglich Diol und Hydroxysäure) zugegeben. Man erhitzt zum Rückfluß (80 - 90 °C) und destilliert azeotrop solange Wasser ab, bis eine Restsäurezahl < 2 mg KOH/g erreicht ist. Anschließend gibt man in 5 Portionen innerhalb von 2 h insgesamt 70 - 130 mol-% (bezüglich des Diols) Paraformaldehyd zu, wobei die theoretische Menge Reaktionswasser ausgekreist wird. Anschließend wird noch 2 h bei 80 - 90 °C nachgerührt. Es wird mit 30 % methanolischer Natriummethylatlösung bis pH 9 neutralisiert, unter Zusatz von Filtrierhilfsmittel filtriert und das Lösungsmittel abdestilliert: Es verbleiben gelbliche Öle.

### Beispiel 1a:

### Polymer aus 12-Hydroxystearinsäure/PEG 400/Paraformaldehyd

Aus 156,6 g (0,50 mol) tech. Hydroxystearinsäure, 100,0 g (0,25 mol) Polyethylenglykol 400 und 9,76 g (0,325 mol) Paraformaldehyd wurden 231,6 g eines gelblichen Öls erhalten.
mittl. Molekulargewicht: 8900
Viskosität: 2,8 Pas (25 °C)

### Beispiel 1b:

### Polymer aus 12-Hydroxystearinsäure/PEG 400/Paraformaldehyd

Aus 156,6 g (0,50 mol) tech. Hydroxystearinsäure, 200 g (0,50 mol) Polyethylenglykol 400 und 19,6 g (0,65 mol) Paraformaldehyd wurden 312,6 g eines gelblichen Öls erhalten.
mittl. Molekulargewicht: 9800
Viskosität: 3,9 Pas (25 °C)

### Beispiel 1c:

### Polymer aus 12-Hydroxystearinsäure/PEG 400/Paraformaldehyd

Aus 156,6 g (0,50 mol) techn. Hydroxystearinsäure, 100 g (0,25 mol) Polyethylenglykol 400 und 7,50 g (0,25 mol) Paraformaldehyd wurden 140,9 g eines gelblichen Öls erhalten.
mittl. Molekulargewicht: 3600
Viskosität: 1,27 Pas (25 °C)

### Beispiel 1d:

### Polymer aus Milchsäure/PEG 400/Paraformaldehyd

Aus 50,4 g (0,50 mol) 90 % Milchsäure, 100 g (0,25 mol) Polyethylenglykol 400 und 9,76 g (0,325 mol) Paraformaldehyd wurden 123 g eines gelblichen Öls erhalten.
mittl. Molekulargewicht: 1900
Viskosität: 0,82 Pas (25 °C)

### Beispiel 1e:

### Polymer aus 4-Hydroxybenzoesäure/PEG 400/Paraformaldehyd

Aus 69,1 g (0,50 mol) 4-Hydroxybenzoesäure, 100 g (0,25 mol) Polyethylenglykol 400 und 9,76 g (0,325 mol) Paraformaldehyd wurden 128 g eines zähen Öls erhalten.
mittl. Molekulargewicht: 900
Viskosität: 16,3 Pas (40 °C)

### Beispiel 1f:

### Polymer aus 12-Hydroxystearinsäure/Milchsäure/PEG 400/Paraformaldehyd

Aus 78,3 g (0,25 mol) tech. Hydroxystearinsäure, 25,0 g (0,25 mol) 90 % Milchsäure, 100 g (0,50 mol) Polyethylenglykol 400 und 9,76 g (0,325 mol) Paraformaldehyd wurden 185,4 g eines gelblichen Öls erhalten.
mittl. Molekulargewicht: 6200
Viskosität: 1,8 Pas (25 °C)

### Beispiel 1g:

### Polymer aus 12-Hydroxystearinsäure/1,6-Hexandiol/Paraformaldehyd

Aus 150,2 g (0,50 mol) tech. Hydroxystearinsäure, 29,6 g (0,25 mol) 1,6-Hexandiol und 9,76 g (0,325 mol) Paraformaldehyd wurden 169,7 g eines farblosen Öls erhalten.
mittl. Molekulargewicht: 4900
Viskosität: 5,8 Pas (25 °C)

### Beispiel 1h:

### Polymer aus Caprolacton/PEG 400/Paraformaldehyd

57,1 g (0,50 mol) Caprolacton und 100 g (0,25 mol) Polyethylenglykol 400 wurden unter Zusatz von 0,4 % konz. Schwefelsäure in Cyclohexan 5 h auf 100 °C erhitzt und die entstehende Estermischung wie oben mit 9,76 g (0,325 mol) Paraformaldehyd acetalisiert. Es wurden 149,2 g eines gelblichen Öls erhalten.
mittl. Molekulargewicht: 10800
Viskosität: 4,95 Pas (25 °C)

### Beispiel 1i:

### Polymer aus 12-Hydroxystearinsäure/PEG 400/Paraformaldehyd

Man verfährt nach Beispiel 1a, tropft jedoch anstelle der Zugabe des Paraformaldehyds 27,9 g (0,325 mol) einer 35 %igen wäßrigen Formalinlösung zu. Es werden 235 g eines gelblichen Öls erhalten.
Viskosität: 4,7 Pas (25 °C)

### Beispiel 2:

### Synthese polymerer Amidacetale durch Umesterung des entsprechenden Methylesteracetals

### Beispiel 2a (Synthese der Vorstufe):

12-Hydroxystearinsäure-methylesterformal
13,15-Dioxa-12,16-di-n-hexyl-heptacosandisäure-di-methylester 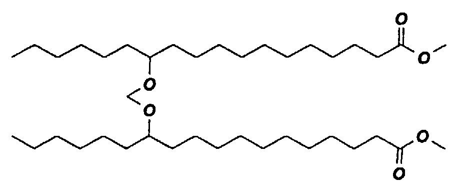 In einem 1 l Vierhalskolben mit Wasserabscheider werden 178,2 g (0,50 mol) 12-Hydroxystearinsäuremethylester und 0,36 g p-Toluolsulfonsäure-Monohydrat (0,2 %) in 250 ml Cyclohexan bei 80° C gelöst. Die Lösung wird bei 87 °C Innentemperatur zum Rückfluß erhitzt, dann werden insgesamt 9,76 g (0,325 mol, 130 mol-%) Paraformaldehyd in 5 Portionen innerhalb 2 h eingetragen, wobei die theoretische Wassermenge abgeschieden wird. Anschließend wird 2 h bei 80 °C nachgerührt. Die Rohlösung wird mit 1,61 g 30 % methanolischer Natriummethylat-Lösung auf pH 9 gestellt und mit Filtrierhilfsmittel filtriert. Das Lösungsmittel wird im Vakuum bei 80 °C/30 mb abdestilliert.
Ausbeute: 179,0 g (98,8 %) eines trüben Öls, Säurezahl 2,0 mg KOH/g, Viskosität (Bohlin, D = 10 s⁻¹, 25° C) = 113 mPas.

### Beispiel 2b:

### Polymer mit Ethylendiamin (Zweitopfverfahren)

160,3 g 12-Hydroxystearinsäure-methylesterformal aus Beispiel 2a und 15,0 g (0,25 mol) Ethylendiamin werden in 85 g Diethylenglykol-dimethylether vereinigt und ohne Destillatabnahme 8 h auf 155 °C erhitzt. Anschließend wurde über eine kurze Vigreux-Kolonne mit aufgesetztem Kolonnenkopf innerhalb 31 h Methanol abdestilliert und schließlich bei 200 - 250 °C das Lösungsmittel abdestilliert. Ausbeute: 166,8 g eines bräunlichen, wachsartigen Feststoffes.

### Beispiel 3:

### Polymeres Esteracetal aus Caprolacton/PEG 200/Benzaldehyd

57,1 g (0,50 mol) ε-Caprolacton und 50,5 g (0,25 mol) 1,12-Dodecandiol und 0,43 g konz. H₂SO₄ werden in 108 g Cyclohexan vorgelegt und 5 h auf 80 °C erhitzt. Anschließend wurden 27,5 g (0,26 mol) Benzaldehyd zugegeben und bei 88 °C innerhalb 7,5 h insgesamt 3,9 ml Wasser am Wasserabscheider ausgekreist. Es wurde bei 25 °C mit 1,1 g 30 % methanolischer Natriummethylatlösung neutralisiert, mit Filtrierhilfsmittel filtriert und das Lösungsmittel bei 90 °C/25 mb abdestilliert. Ausbeute: 92,7 g eines farblosen Öls.
Viskosität: 9,0 Pas (25 °C)
mittl. Molekulargewicht: 5600

### Beispiel 4:

### 12-Hydroxystearinsäure/Diglykolamin/HCHO= 2 : 1 : 1

Im 1 l Vierhalskolben mit Wasserabscheider wurden 156,6 g (0,50 mol) techn. 12-Hydroxystearinsäure, 0,73 g konz. H₂SO₄ und 10 g Cyclohexan vorgelegt, 26,1 g (0,25 mol) Diglykolamin zugegeben und 20 h auf 170 - 180 °C erhitzt, wobei die theoretische Wassermenge ausgekreist wurde. Anschließend wurde 3 h bei 120 °C/50 mb nachkondensiert. Es wurde ein wachsartiger Feststoff mit einem Basenstickstoffgehalt von 0,02 % erhalten. Dieser wurde in 183 g Cyclohexan bei 84 °C gelöst, 0,73 g konz. H₂SO₄ zugegeben und innerhalb 2 h insgesamt 9,76 g (0,325 mol) Paraformaldehyd in fünf Portionen zugegeben und weitere 2 h nachgerüht. Es wurde mit 4,5 g 30 % methanolischer Natriummethylatlösung neutralisiert, mit Filtrierhilfsmittel filtriert und das Lösungsmittel bei 90 °C/25 mb abdestilliert.
Ausbeute: 145,8 g eines hochviskosen Öls.
Viskosität: 33,9 Pas (60 °C)
mittl. Molekulargewicht: 4900

## Patentansprüche

1. Polymere Acetale mit der wiederkehrenden Struktureinheit (I) 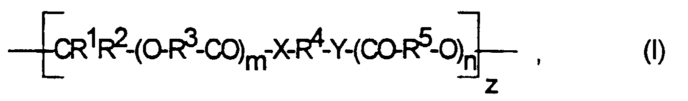 dadurch gekennzeichnet, daß
R¹ und R² unabhängig voneinander H, einen verzweigten oder unverzweigten, gesättigten oder ungesättigten C₁-C₁₂-Alkylrest, einen Phenyl- oder Naphthylrest bedeuten,
R³ und R⁵ unabhängig voneinander einen verzweigten oder unverzweigten, substituierten oder unsubstituierten C₁-C₃₀-Alkylen- oder C₂-C₃₀-Alkenylenrest, einen Phenylen- oder Naphthylenrest bedeuten,
R⁴ einen verzweigten oder unverzweigten C₁-C₂₀₀-Alkylen- oder Cycloalkylenrest, einen C₆-C₂₀₀-Arylen- oder Alkylarylenrest darstellt, wobei diese Reste gegebenenfalls durch Heteroatome wie F, Cl, Br oder I substituiert oder durch Heteroatome wie Sauerstoff, Schwefel oder Stickstoff unterbrochen sein können,
X und Y unabhängig voneinander entweder O oder NR⁶ bedeuten, wobei
R⁶ entweder H oder einen verzweigten oder unverzweigten C₁-C₃₀-Alkyl- oder Cycloalkylrest oder einen C₆-C₅₀-Aryl- oder C₇-C₅₀-Alkylarylrest darstellt,
n und m Zahlen von 0 bis 10 darstellen, deren Summe größer als 0 ist, und wobei für X = NR⁶ die Zahl m ungleich 0 und für Y = NR⁶ die Zahl n ungleich 0 ist,
z eine Zahl von 2 bis 100 bedeutet.

2. Polymere Acetale nach Anspruch 1, dadurch gekennzeichnet, daß
R¹ und R² unabhängig voneinander H, einen verzweigten oder unverzweigten, gesättigten oder ungesättigten C₁-C₄-Alkylrest oder einen Phenyl- rest bedeuten,
R³ und R⁵ unabhängig voneinander einen verzweigten oder unverzweigten, substituierten oder unsubstituierten C₅-C₂₀-Alkylen- oder Alkenylenrest bedeuten,
R⁴ einen verzweigten oder unverzweigten C₂-C₅₀-Alkylenrest darstellt, der gegebenenfalls durch Sauerstoff unterbrochen sein kann,
X und Y Sauerstoff bedeuten,
n und m Zahlen von 0 bis 5 darstellen, deren Summe 1 bis 5 ist,
z eine Zahl von 3 bis 20 bedeutet.

3. Polymere Acetale nach Anspruch 1, dadurch gekennzeichnet, daß R¹ und R² Wasserstoff bedeuten.

4. Verfahren zur Herstellung von polymeren Acetalen gemäß Anspruch 1, dadurch gekennzeichnet, daß man Ester, Amidester oder Amide von Hydroxycarbonsäuren mit einem Aldehyd oder einem Keton zum Polyacetal kondensiert oder daß man nach Acetalisierung einer Hydroxycarbonsäure mit einem Aldehyd oder Keton zur Acetaldicarbonsäure diese mit einem Diol, einem Aminoalkohol oder einem Diamin oder Mischungen hieraus verestert oder amidiert oder daß man einen Ester aus Hydroxycarbonsäure und C₁-C₄-Alkohol mit einem Alkohol oder Keton zum Acetalester umsetzt und diesen mit einem Diol, einem Aminoalkohol oder einem Diamin oder Mischungen hieraus umestert oder umamidiert.

5. Verfahren zur Herstellung von polymeren Acetalen gemäß Anspruch 1, dadurch gekennzeichnet, daß man Ester aus einer oder mehreren Hydroxycarbonsäuren der Formel HO-R³-COOH oder HO-R⁵-COOH und einem oder mehreren Diolen der Formel HO-R⁴-OH mit einem Aldehyd oder einem Keton der Formel (R¹,R²)CO unter Wasserabscheidung zum Polyacetal kondensiert.

6. Verfahren nach Anspruch 4, dadurch gekennzeichnet, daß es sich bei den zugrundeliegenden Hydroxycarbonsäuren um Ricinolsäure oder 12-Hydroxystearinsäure handelt.

7. Verfahren nach Anspruch 4, dadurch gekennzeichnet, daß es sich bei den zugrundeliegenden Diolen um Polyethylenglykole oder Polyethylenglykol/Polyalkylenglykol-Mischpolymere oder Mischungen daraus der Formel HO-(CHR⁷-CH₂O)ₐ(CH₂CH₂O)_{b}H handelt, wobei R⁷ Methyl oder Ethyl bedeutet und a und b unabhängig voneinander eine Zahl von 1 bis 50 darstellen.

8. Verfahren nach Anspruch 4, dadurch gekennzeichnet, daß man Amidester aus Hydroxycarbonsäure und Aminoalkohol mit einem Aldehyd oder einem Keton unter Wasserabscheidung zum Polyacetal kondensiert.

9. Verfahren nach Anspruch 4, dadurch gekennzeichnet, daß man Amide aus Hydroxycarbonsäure und Diamin mit einem Aldehyd oder einem Keton unter Wasserabscheidung zum Polyacetal kondensiert.

10. Verfahren nach Anspruch 4, dadurch gekennzeichnet, daß man zunächst eine geeignete Hydroxycarbonsäure mit einem Aldehyd oder Keton zur Acetaldicarbonsäure acetalisiert und anschließend mit einem Diol, einem Aminoalkohol oder einem Diamin oder Mischungen hieraus verestert oder amidiert.

11. Verfahren nach Anspruch 4, dadurch gekennzeichnet, daß man zunächst einen Hydroxycarbonsäureester eines C₁-C₄-Alkohols mit einem Alkohol oder Keton zum Acetalester umsetzt und diesen unter Abscheidung des C₁-C₄-Alkohols mit einem Diol, einem Aminoalkohol oder einem Diamin oder Mischungen einer oder mehrerer dieser Komponenten hieraus im alkalischen Milieu umestert oder umamidiert.

12. Verwendung der polymeren Acetale gemäß Anspruch 1 als Basiskomponenten für wasserlösliche Kühlschmiermittel.

## Claims

1. A polymeric acetal with the repeat structural unit (I) 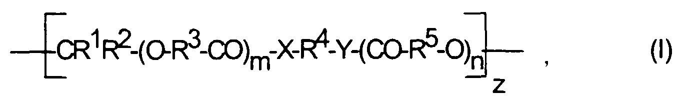 wherein
R¹ and R² are, independently of one another, H, a branched or unbranched, saturated or unsaturated C₁-C₁₂-alkyl radical or a phenyl or naphthyl radical,
R³ and R⁵ are, independently of one another, a branched or unbranched, substituted or unsubstituted C₁-C₃₀-alkylene or C₂-C₃₀-alkenylene radical, a phenylene radical or a naphthylene radical,
R⁴ is a branched or unbranched C₁-C₂₀₀-alkylene or cycloalkylene radical, a C₆-C₂₀₀-arylene or alkylarylene radical, where these radicals may be substituted by heteroatoms such as F, Cl, Br or I or can be interrupted by heteroatoms such as oxygen, sulfur or nitrogen,
X and Y are, independently of one another, either O or NR⁶, where
R⁶ is either H or a branched or unbranched C₁-C₃₀-alkyl or cycloalkyl radical or a C₆-C₅₀-aryl or C₇-C₅₀-alkylaryl radical,
n and m are numbers from 0 to 10, the sum of which is greater than 0, and if X = NR⁶, the number m is not 0 and if Y = NR⁶, the number n is not 0, and
z is a number from 2 to 100.

2. A polymeric acetal as claimed in claim 1, wherein
R¹ and R² are, independently of one another, H, a branched or unbranched, saturated or unsaturated C₁-C₄-alkyl radical or a phenyl radical,
R³ and R⁵ are, independently of one another, a branched or unbranched, substituted or unsubstituted C₅-C₂₀-alkylene or alkenylene radical,
R⁴ is a branched or unbranched C₂-C₅₀-alkylene radical, which may be interrupted by oxygen,
X and Y are oxygen,
n and m are numbers from 0 to 5, the sum of which is 1 to 5, and
z is a number from 3 to 20.

3. A polymeric acetal as claimed in claim 1, wherein
R¹ and R² are hydrogen.

4. A process for the preparation of a polymeric acetal as claimed in claim 1, which comprises condensing an ester, amide ester or amide of a hydroxycarboxylic acid with an aldehyde or a ketone to give the polyacetal or, after acetalation of a hydroxycarboxylic acid using an aldehyde or ketone to give the acetaldicarboxylic acid, esterifying or amidating the latter using a diol, an aminoalcohol or a diamine or mixtures thereof, or reacting an ester of a hydroxycarboxylic acid and a C₁-C₄-alcohol with an alcohol or ketone to give the acetal ester and transesterifying or transamidating the latter using a diol, an aminoalcohol or a diamine or mixtures thereof.

5. A process for the preparation of a polymeric acetal as claimed in claim 1, which comprises condensing an ester of one or more hydroxycarboxylic acids of the formula HO-R³-COOH or HO-R⁵-COOH and one or more diols of the formula HO-R⁴-OH with an aldehyde or a ketone of the formula (R¹,R²)CO with elimination of water to give the polyacetal.

6. The process as claimed in claim 4, wherein the base hydroxycarboxylic acid is ricinoleic acid or 12-hydroxystearic acid.

7. The process as claimed in claim 4, wherein the base diol is polyethylene glycol or a polyethylene glycol-polyalkylene glycol copolymer or a mixture thereof of the formula HO-(CHR⁷-CH₂O)ₐ(CH₂CH₂O)_{b}H, where R⁷ is methyl or ethyl and a and b are, independently of one another, a number from 1 to 50.

8. The process as claimed in claim 4, wherein an amide ester of a hydroxycarboxylic acid and an aminoalcohol is condensed with an aldehyde or a ketone with elimination of water to give the polyacetal.

9. The process as claimed in claim 4, wherein an amide of a hydroxycarboxylic acid and a diamine is condensed with an aldehyde or a ketone with elimination of water to give the polyacetal.

10. The process as claimed in claim 4, wherein a suitable hydroxycarboxylic acid is firstly acetalated using an aldehyde or ketone to give the acetaldicarboxylic acid, which is then esterified or amidated using a diol, an aminoalcohol or a diamine or mixtures thereof.

11. The process as claimed in claim 4, wherein a hydroxycarboxylic acid ester of a C₁-C₄-alcohol is firstly reacted with an alcohol or ketone to give the acetal ester which, with elimination of the C₁-C₄-alcohol, is transesterified or transamidated using a diol, an aminoalcohol or a diamine or mixtures of one or more of these components under alkaline conditions.

12. The use of a polymeric acetal as claimed in claim 1 as base component for water-soluble cooling lubricants.

## Revendications

1. Acétal polymère ayant le motif structurel de répétition (I) 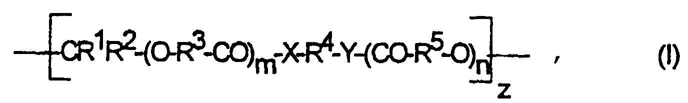 caractérisé en ce que,
R¹ et R² représentent indépendamment l'un de l'autre H, un groupe alkyle en C₁ à C₁₂ ramifié ou non ramifié, saturé ou insaturé, un groupe phényle ou naphtyle,
R³ et R⁵ représentent indépendamment l'un de l'autre un groupe alkylène en C₁ à C₃₀ ou alcénylène en C₂ à C₃₀ ramifié ou non ramifié, substitué ou non substitué, un groupe phénylène ou naphtylène,
R⁴ représente un groupe alkylène ou cycloalkylène ramifié ou non ramifié en C₁ à C₂₀₀, un groupe arylène ou alkylarylène en C₆ à C₂₀₀, ces groupes étant éventuellement substitués par des hétéroatomes tels que F, Cl, Br ou I ou pouvant être interrompus par des hétéroatomes comme l'oxygène, le soufre ou l'azote.
X et Y représentent indépendamment l'un de l'autre O ou NR⁶,
groupe dans lequel R⁶ représente soit H ou un groupe alkyle ou cycloalkyle en C₁ à C₃₀ ou un groupe aryle en C₆ à C₅₀ ou alkylaryle en C₇ à C₅₀,
n et m représentent des nombres de 0 à 10 dont la somme de n et m est supérieure à 0, et pour lesquels pour X = NR⁶ le nombre m n'est pas égal à 0 et pour Y = NR⁶ le nombre n n'est pas égal à 0,
z représente un nombre de 2 à 100.

2. Acétal polymère selon la revendication 1, caractérisé en ce que,
R¹ et R² représentent indépendamment l'un de l'autre H, un groupe alkyle en C₁ à C₄ ramifié ou non ramifié, saturé ou insaturé ou un groupe phényle,
R³ et R⁵ représentent indépendamment l'un de l'autre un groupe alkylène ou alcénylène en C₅ à C₂₀ ramifié ou non ramifié, substitué ou non substitué,
R⁴ représente un groupe alkylène ramifié ou non ramifié en C₂ à C₂₀₀, un groupe arylène ou alkylarylène en C₆ à C₅₀, qui peuvent être éventuellement interrompus par des atomes d'oxygène,
X et Y représentent un atome d'oxygène,
n et m représentent des nombres de 0 à 5 dont la somme va de 1 à 5,
z représente un nombre de 3 à 20.

3. Acétal polymère selon la revendication 1, caractérisé en ce que, R¹ et R² représentent un atome d'hydrogène.

4. Procédé pour la préparation d'acétals polymères selon la revendication 1, caractérisé en ce que, l'on condense des esters des esters amides ou des amides d'acide hydroxycarboxyliques avec un aldéhyde ou une cétone pour obtenir un polyacétal ou en ce qu'après acétalisation d'un acide hydroxycarboxylique avec un aldéhyde ou une cétone en acide acétaldicarboxylique, on réalise l'estérification ou l'amidification de ceux-ci avec un diol, un aminoalcool ou une diamine ou des mélanges de ceux-ci ou en ce qu'on met à réagir un ester d'acide hydroxycarboxylique et d'alcool en C₁ à C₄ avec un alcool ou une cétone pour obtenir un ester acétal et en ce qu'on réalise la transestérification ou la transamidification de celui-ci avec un diol, un aminoalcool ou une diamine ou des mélanges de ceux-ci.

5. Procédé pour la préparation d'acétals polymères selon la revendication 1, caractérisé en ce que, l'on condense des esters d'un ou de plusieurs acides hydroxycarboxyliques de formule HO-R³-COOH ou HO-R⁵-COOH et d'un ou de plusieurs diols de formule HO-R⁴-OH avec un aldéhyde ou une cétone de formule (R¹, R²)CO en éliminant l'eau pour obtenir le polyacétal.

6. Procédé selon la revendication 4, caractérisé en ce qu'il s'agit pour les acides hydroxycarboxyliques correspondants de l'acide ricinoléique ou de l'acide 12-hydroxystéarique.

7. Procédé selon la revendication 4, caractérisé en ce qu'il s'agit pour les diols correspondants des polyéthylèneglycols ou de polymères mixtes polyéthylèneglycol/polyalkylèneglycol ou de mélanges de ceux-ci de formule
HO-(CHR⁷-CH₂O)ₐ(CH₂CH₂O)_{b}H, dans laquelle R⁷ représente un groupe méthyle ou éthyle et a et b représentent indépendamment l'un de l'autre un nombre de 1 à 50.

8. Procédé selon la revendication 4, caractérisé en ce que, l'on condense des esters amides d'acide hydroxycarboxylique et d'aminoalcool avec un aldéhyde ou une cétone en éliminant l'eau pour obtenir le polyacétal.

9. Procédé selon la revendication 4, caractérisé en ce que, l'on condense des amides d'acide hydroxycarboxylique et de diamine avec un aldéhyde ou une cétone en éliminant l'eau pour obtenir le polyacétal.

10. Procédé selon la revendication 4, caractérisé en ce qu'on réalise d'abord l'acétalisation d'un acide hydroxycarboxylique approprié avec un aldéhyde ou une cétone pour obtenir l'acide acétaldicarboxylique et en ce qu'on réalise ensuite l'estérification ou l'amidification avec un diol, un aminoalcool ou une diamine ou des mélanges de ceux-ci.

11. Procédé selon la revendication 4, caractérisé en ce qu'on met d'abord à réagir un ester d'acide hydroxycarboxylique d'un alcool en C₁ à C₄ avec un alcool ou une cétone pour obtenir l'ester acétal et en ce qu'on réalise la transestérification ou la transamidification de celui-ci en éliminant l'alcool en C₁ à C₄ avec un diol, un amino-alcool ou une diamine ou des mélanges d'un ou de plusieurs de ces composants en milieu alcalin.

12. Utilisation des acétals polymères selon la revendication 1 comme composants de base pour des agents réfrigérants hydrosolubles.
